# EUROPÄISCHE PATENTANMELDUNG

(11) **EP 0 736 403 A2**
(43) Veröffentlichungstag der Anmeldung: **09.10.1996**
(21) Anmeldenummer: 96104394.0
(22) Anmeldetag: 20.03.1996
(51) Int. Cl.: B60H 3/06

(54) **Vorrichtung und Verfahren zur Behandlung eines einem Innenraum zugeführten Luftstromes**

(30) Priorität: 06.04.1995 DE 19512844
(71) Anmelder: Behr GmbH & Co., 70469 Stuttgart (DE); MERCEDES-BENZ AG, 70327 Stuttgart (DE)
(72) Erfinder: Abersfelder, Günter, Dr., 71065 Sindelfingen (DE); Khelifa, Noureddine, Dr., 70180 Stuttgart (DE)
(74) Vertreter: Riedel, Peter

(57) **Zusammenfassung**

Eine Vorrichtung zur Behandlung eines Luftstromes (13), der einem Fahrzeuginnenraum zugeführt werden soll, umfaßt ein Luftführungsgehäuse (2) mit einem darin angeordneten Sorptionsreaktor (3) und einem diesem in Luftströmungsrichtung nachgeordneten Filter (4) mit einem für Schadstoffe wirksamen Adsorbens. Dabei dient der Sorptionsreaktor (3) zur Senkung der Luftfeuchtigkeit und das Filter (4) zur Beseitigung von Luftverunreinigungen, vornehmlich von gasförmigen Schadstoffen. In Abhängigkeit vorgegebener Parameter bzw. Betriebsintervallen werden der Sorptionsreaktor (3) desorbiert und das Filter (4) regeneriert, und zwar mittels eines in einer Heizvorrichtung (8) erwärmten Luftstromes.

## Beschreibung

Die Erfindung betrifft eine Vorrichtung zur Behandlung eines einem Fahrzeuginnenraum zugeführten Luftstromes der im Oberbegriff des Anspruch 1 angegebenen Gattung. Außerdem betrifft die Erfindung ein Verfahren der Gattung gemäß dem Oberbegriff des Anspruch 11.

In der DE 43 04 077 A1 ist eine Vorrichtung zur Senkung der Luftfeuchtigkeit in einem Fahrgastraum eines Kraftfahrzeugs beschrieben, bei der in einem Luftführungsgehäuse unter anderem ein Sorptionsreaktor angeordnet ist. Im Adsorptionsbetrieb wird in dem Sorptionsreaktor die Luft entfeuchtet und anschließend dem Fahrgastraum zugeführt. Durch Aufheizung der Luft vor dem Sorptionsreaktor und entsprechende Umsteuerung von Luftklappen wird der Sorptionsreaktor mit einem Desorptionsluftstrom beaufschlagt, der zur Außenseite des Fahrzeugs abgeleitet wird. Damit dem Fahrzeuginnenraum und auch dem Sorptionsreaktor keine mit Schmutzpartikeln beladene Luft zugeführt wird, ist vor der gesamten Anordnung ein Filter vorgesehen. Mit einem solchen Filter werden zwar Schmutzpartikel aus dem Luftstrom entfernt, zur Beseitigung von gasförmigen Verunreinigungen des Luftstromes ist ein solches Filter jedoch nicht geeignet.

Aus der DE 30 00 078 C2 ist ein Chemiesorptionsfilter für ein Kraftfahrzeug bekannt, durch das die insbesondere bei Smogbelastung verunreinigte Luft gefiltert wird. Mit einem solchen Chemiesorptionsfilter können auch gasförmige Schad- und Aromastoffe beseitigt werden. Da solche Chemiesorptionsfilter empfindlich gegen Feuchtigkeit sind, muß in zeitlichen Intervallen ein heißer Luftstrom in umgekehrter Richtung durch den Chemiesorptionsfilter gefördert werden, um diesen zu regenerieren. Mit der bekannten Anordnung läßt sich die Luftfeuchtigkeit im Fahrgastraum nicht spürbar absenken und bei ungünstigen Witterungsbedingungen sind lediglich kurze Betriebszyklen des Chemiesorptionsfilters möglich, um ein Versotten des Filtermaterials zu verhindern. Außerdem ist die Filterwirkung durch die im Filtermaterial eingelagerte Feuchtigkeit deutlich reduziert.

Der Erfindung liegt die Aufgabe zugrunde, eine Vorrichtung zur Behandlung eines einem Fahrzeuginnenraum zugeführten Luftstromes der im Oberbegriff des Anspruchs 1 genannten Gattung zu schaffen, mit der eine deutliche Senkung der Luftfeuchtigkeit und eine wirksame Beseitigung von Schad- und Aromastoffen während längerer Betriebszyklen möglich ist. Außerdem ist es Aufgabe der Erfindung, ein Verfahren zur Behandlung eines einem Fahrzeuginnenraum zuführbaren Luftstromes zu schaffen.

Diese Aufgabe wird durch eine Vorrichtung mit den Merkmalen des Anspruchs 1 bzw. durch ein Verfahren mit den Merkmalen des Anspruchs 11 gelöst.

Die wesentlichen Vorteile der Erfindung sind darin zu sehen, daß durch die Senkung der Luftfeuchtigkeit im Sorptionsreaktor lediglich eine geringe Menge des Schadstoffe adsorbierenden Materials notwendig ist, um wirkungsvoll die Schad- und Aromastoffe zu absorbieren. Da selbsttätig eine Desorption des Sorptionsreaktors und eine Regeneration des Filtermaterials erfolgt, ist die Vorrichtung völlig wartungsfrei. Als Material zur Schadstoffadsorption sind Aktivkohle oder bestimmte Arten von Zeolith besonders geeignet.

Gemäß einer bevorzugten Ausgestaltung liegen der Sorptionsreaktor und das Filter großflächig unmittelbar aneinander. Auf diese Weise werden die Druckverluste sehr gering gehalten. Je nach Form des Filters kann dessen struktureller Aufbau unterschiedlich ausgeführt sein. Eine vorteilhafte Ausführung besteht in Form einer Schüttung von Aktivkohlekugeln. Bei einer anderen zweckmäßigen Ausführung ist das Filter aus einem mit Aktivkohlekugeln versehenen offenporigen Schaumstoff gebildet. Während bei einer Schüttung aus Aktivkohlekugeln eine formstabile Hülle erforderlich ist, kann ein Filter mit einer Trägerstruktur aus offenporigem Schaum ohne zusätzliche Umhüllungsmaßnahme in der Vorrichtung eingesetzt werden. Da der offenporige Schaum flexibel sein kann, ist auch eine Anpassung des Filters an die abströmseitige Form des Sorptionsreaktors möglich.

Sofern die Vorrichtung lediglich einen Sorptionsreaktor mit einem Filter umfaßt, sollte die vom Luftstrom beaufschlagte Fläche des Sorptionsreaktors und Filters möglichst groß sein. Besonders zweckmäßig ist es daher, daß der Sorptionsreaktor und das Filter die Form von ineinandergesteckten hohlen Kegelstümpfen aufweisen, an deren verjüngter Stirnseite eine Abschlußwand angeordnet ist. Somit tritt die Luft an der größeren Stirnseite in das Innere der Kegelstumpfform ein und an der Mantelfläche des Kegelstumpfes aus. In dem Luftführungsgehäuse ist abströmseitig des Filters eine Luftkammer gebildet, an der ein Luftkanal zum Fahrzeuginnenraum und ein weiterer Luftkanal zur Außenseite des Fahrzeugs angeschlossen sind. Im wechselnden Betrieb ist jeweils einer dieser Luftkanäle geöffnet, während der andere geschlossen ist. Zur Reduzierung des Bauaufwandes ist es dabei zweckmäßig, daß die Luftkanäle benachbart zueinander an der Luftkammer angeschlossen und von einer gemeinsamen Klappe wechselseitig verschließbar sind.

Gemäß einer weiteren Ausführungsform der Erfindung sind in dem Luftführungsgehäuse zwei parallele Luftströmungswege gebildet, wobei in jedem der Luftströmungswege ein Sorptionsreaktor mit einem Schadstoffe adsorbierendem Filter vorgesehen ist und Luftstromsteuerelemente vorgesehen sind, durch die im Wechsel ein Luftströmungsweg an einen Zuluftkanal des Fahrzeuginnenraumes angeschlossen ist und der andere Luftströmungsweg zur Außenseite des Fahrzeugs führt. Um eine kompakte und einfach aufgebaute Anordnung zu erreichen, sind die Luftströmungswege durch eine gemeinsame Hauptluftkammer und zwei getrennte Nebenluftkammern gebildet, wobei jeweils ein Sorptionsreaktor mit Filter zwischen der Hauptluftkammer und einer der Nebenluftkammern angeordnet ist und sich das Schadstoffe adsorbierende Filter jeweils auf der der Hauptluftkammer zugewandten Seite des Sorptionsreaktors befindet. Dabei ist zweckmäßigerweise die Hauptluftkammer abströmseitig mit dem Zuluftkanal des Fahrzeuginnenraumes verbunden und die abströmseitigen Enden der Nebenluftkammern sind mit Öffnungen versehen, an die zur Außenseite des Fahrzeugs führende Luftkanäle angeschlossen sind.

Das Verfahren kann als diskontinuierlicher Betrieb erfolgen, wobei in einer gemeinsamen Einheit aus Sorptionsreaktor und Filter in zeitlich aufeinanderfolgenden Abschnitten die Adsorption und Desorption durchgeführt werden. Dabei kann bspw. die Länge des Zeitabschnittes für die Adsorption vorgegeben sein und vorzugsweise mehrere Stunden betragen. Demgegenüber ist die Länge des Zeitabschnittes für die Desorption wesentlich geringer und beträgt vorzugsweise weniger als 30 Minuten. Die Länge des Zeitabschnitts für die Desorption kann ebenfalls zeitlich vorgegeben sein oder aber auch vom Regenerationsgrad des Sorptionsreaktors und/oder des Filters bestimmbar sein. Zur Desorption wird der Luftstrom des diskontinuierlichen Betriebs auf eine Temperatur von ca. 120° C oder mehr aufgeheizt, da bei solchen Anordnungen das Filter auch in dieser Betriebsphase dem Sorptionsreaktor nachgeschaltet ist.

Sofern zwei parallel durchströmte Einheiten aus je einem Sorptionsreaktor und einem Filter vorgesehen sind, ist ein kontinuierlicher Betrieb möglich, wobei jeweils eine Einheit von einem Adsorptionsluftstrom beaufschlagt wird, während gleichzeitig die andere Einheit von einem Desorptionsluftstrom beaufschlagt wird. In Abhängigkeit vorgegebener Parameter werden die Betriebsarten in beiden Einheiten gewechselt, wobei als Kriterium für den Wechsel der Betriebsarten der Belastungsgrad des im Adsorptionsluftstrom befindlichen Sorptionsreaktor dient. Sofern die Anordnung so getroffen ist, daß im Desorptions- bzw. Regenerationsbetrieb die Richtung der Luftströmung in der aus Sorptionsreaktor und Filter gebildeten Einheit umgekehrt ist, beträgt die Desorptionstemperatur weniger als 100° C.

Ausführungsbeispiele der erfindungsgemäßen Vorrichtung sind nachstehend anhand der Zeichnung näher erläutert. In der Zeichnung zeigt:
- Fig. 1: eine Vorrichtung mit zu einer Baueinheit zusammengefaßtem Sorptionsreaktor und Schadstoffilter im Adsorptionsbetrieb,
- Fig. 2: eine Vorrichtung gemäß Fig. 1 im Desorptionsbetrieb,
- Fig. 3: eine Vorrichtung zum kontinuierlichen Trocknen und Schadstoffreduzieren der Luft in einer ersten Betriebsartenstellung,
- Fig. 4: eine Anordnung gemäß Fig. 3 in einer zweiten Betriebsartenstellung,
- Fig. 5: ein Diagramm über die Gleichgewichtskapazität für Benzol und Wasser an Aktivkohle.

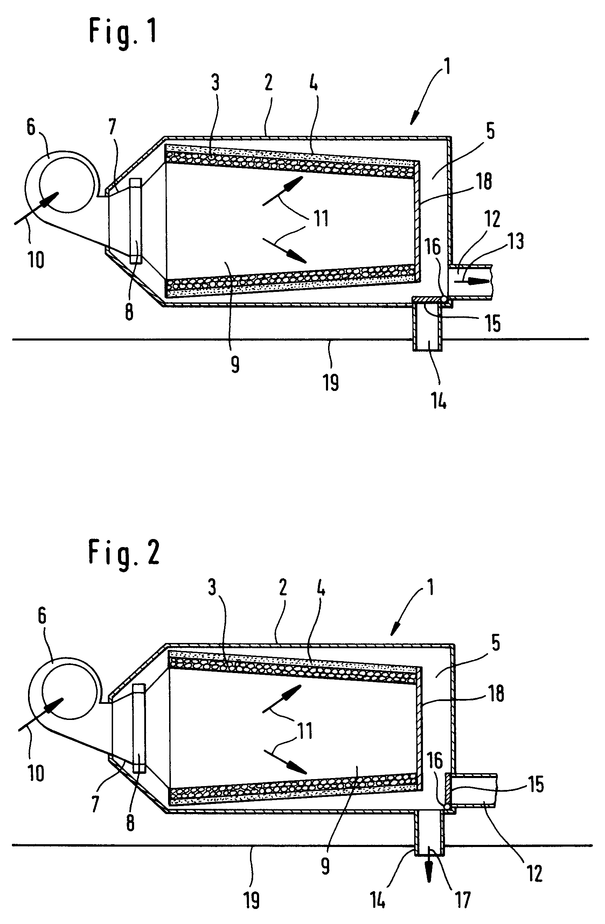

In den Fig. 1 und 2 ist eine Vorrichtung 1 zur Behandlung eines Luftstromes in einem Fahrzeug dargestellt, wobei eine Außenwand des Fahrzeugs das Bezugszeichen 19 trägt. In einem Luftführungsgehäuse 2 der Vorrichtung 1 ist ein Sorptionsreaktor 3 und Aktivkohlefilter 4 dargestellt, die beide als hohle Kegelstümpfe geformt und ineinandergesteckt sind, so daß sie in gegenseitiger großflächiger Anlage angeordnet sind. Auf der im Durchmesser größeren Seite der Kegelstumpfform ist ein Luftführungskanal 7 mit einer darin befindlichen Heizvorrichtung 8 vorgesehen, wobei vor dem Luftführungskanal 7 ein Gebläse 6 angeordnet ist. An dem verjüngten Ende der Kegelstumpfform ist eine Abschlußwand 18 angeordnet, durch die ein Hohlraum 9 innerhalb des Sorptionsreaktors 3 von einer Luftkammer 5 getrennt ist, die innerhalb des Luftführungsgehäuses 2 abströmseitig des Aktivkohlefilters 4 gebildet ist. An das Luftführungsgehäuse 2 ist ein Luftkanal 12 angeschlossen, der zu einem - in der Zeichnung nicht dargestellten - Fahrzeuginnenraum führt. Des weiteren ist ein Luftkanal 14 an das Luftführungsgehäuse 2 angeschlossen, der durch die Außenwand 19 des Fahrzeugs zur Umgebungsluft führt. Die beiden Luftkanäle 12 und 14 sind nahe beieinander an dem Luftführungsgehäuse 2 angeordnet, so daß mittels einer um ein Lager 16 schwenkbaren Klappe 15 wahlweise jeweils einer der Luftkanäle 12, 14 geöffnet und der andere verschlossen ist.

Bei der in Fig. 1 gezeigten Betriebsweise wird von dem Gebläse 6 Luft entsprechend dem Pfeil 10 angesaugt und durch den Luftkanal 7 in den Hohlraum 9 geleitet. Dabei tritt die Luft durch die Heizvorrichtung 8, die jedoch in dieser Betriebsweise nicht aktiviert ist. Entsprechend den Pfeilen 11 tritt die Luft durch den Sorptionreaktor 3 und den Aktivkohlefilter 4, wobei die Luft in dem Sorptionsreaktor 3 getrocknet und in dem Aktivkohlefilter 4 von Schad- und Aromastoffen befreit wird. Der aus dem Aktivkohlefilter 4 austretende Luftstrom wird durch die Luftkammer 5 zu dem Luftkanal 12 geleitet und in Richtung des Pfeiles 13 zu dem Fahrzeuginnenraum geführt. Da bei geöffnetem Luftkanal 12 der andere Luftkanal 14 durch die Klappe 15 verschlossen ist, wird das gesamte Luftvolumen durch den Luftkanal 12 abgeführt. Bei der in Fig. 2 gezeigten Betriebsstellung wird die durch den Luftkanal 7 geführte Luft in der Heizvorrichtung 8 erwärmt und bspw. auf eine Temperatur von etwa 120° C gebracht. Die so aufgeheizte Luft dient zur Desorption des Reaktormaterials im Sorptionsreaktor 3 und zur Regeneration des Filtermaterials im Filter 4. Dabei tritt der Luftstrom entsprechend den Pfeilen 11 durch den Sorptionsreaktor 3 und den Aktivkohlefilter 4 und gelangt in die Luftkammer 5. Da bei dieser Betriebsweise der Luftkanal 12 mittels der Klappe 15 verschlossen ist, wird gleichzeitig der Luftkanal 14 freigegeben, so daß der Luftstrom gemäß Pfeil 17 durch die Außenwand 19 in die Umgebungsluft gelangt.

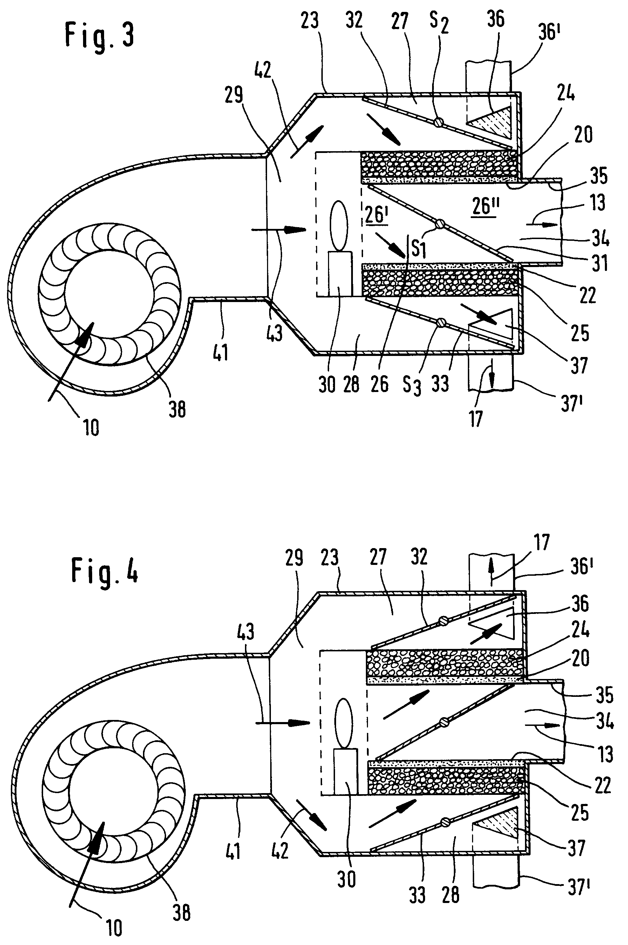

Die in den Fig. 3 und 4 gezeigte Vorrichtung 21 zur Senkung der Luftfeuchtigkeit und Beseitigung von Schad- und Aromastoffen umfaßt zwei in einem Luftführungsgehäuse 23 angeordnete Sorptionsreaktoren 24, 25 und baulich mit diesen vereinigten Aktivkohlefilter 20 und 22. Die Sorptionsreaktoren 24 und 25 mit den jeweiligen Aktivkohlefiltern 20 und 22 sind parallel zueinander angeordnet, wobei zwischen den Aktivkohlefiltern eine gemeinsame Hauptluftkammer 26 gebildet ist. Mit der anderen Seite begrenzen die Sorptionsreaktoren 24 und 25 jeweils eine Nebenluftkammer 27 und 28, die sich parallel zur Längsrichtung der Reaktoren erstrecken. Jeder Sorptionsreaktor 24, 25 bildet mit seinem Aktivkohlefilter 20, 22 eine luftdurchlässige Wand zwischen den Nebenluftkammern 27, 28 und der Hauptluftkammer 26. Die Hauptluftkammer 26 und die Nebenluftkammern 27, 28 sind an ihren einer Lufteintrittskammer 29 zugewandten Enden offen, wobei eingangsseitig der Hauptluftkammer 26 eine Heizvorrichtung 30 zur Erwärmung des in die Hauptluftkammer eintretenden Luftstromes vorgesehen ist.

In jeder Nebenluftkammer 27, 28 und der Hauptluftkammer 26 ist eine Luftstromsteuerklappe 31, 32, 33 angeordnet, die sich diagonal in der jeweiligen Kammer 26, 27, 28 erstreckt und um eine Schwenkachse S₁, S₂, S₃ in der Klappenmitte schwenkbar ist, so daß die Luftstromsteuerklappen zwischen den durch die Diagonalen der Luftkammern 26, 27, 28 bestimmten Endlagen umschaltbar sind. Alle Luftstromsteuerklappen 31, 32, 33 werden gleichzeitig betätigt, vorzugsweise von einem gemeinsamen Antrieb. Die Luftstromsteuerklappe 31 in der Hauptluftkammer 26 teilt diese in jeder der beiden möglichen Stellungen in einen vorderen Bereich 26' und einen hinteren Bereich 26''. An einer Öffnung 34 im Bereich 26'' der Hauptluftkammer 26 ist ein zu dem in der Zeichnung nicht gezeigten Fahrzeuginnenraum führender Luftkanal 35 angeschlosssen.

In den Nebenluftkammern 27 und 28 sind Fortluftöffnungen 36; 37 vorgesehen, die sich an den der Lufteintrittskammer entfernt liegenden Enden befinden und an die Fortluftkanäle 36', 37' angeschlossen sind. Die Fortluftöffnungen 36, 37 sind je nach Stellung der Luftstromsteuerklappen 32 und 33 schließbar, wobei stets eine der Fortluftöffnungen geschlossen und die andere geöffnet ist.

An dem Luftführungsgehäuse 23 ist vor der Lufteintrittskammer 29 ein Gebläse 38 angeordnet, das Luft gemäß Pfeil 10 ansaugt und einen Luftstrom über einen Diffusor 41 in die Lufteintrittskammer 29 erzeugt. Dieser Luftstrom wird in einen Adsorptionsluftstrom 42 und einen Desorptionsluftstrom 43, der zunächst die Heizvorrichtung 30 durchströmt, aufgeteilt. Der Adsorptionsluftstrom 42 wird gemäß Fig. 3 aufgrund der Stellung der Luftstromsteuerklappen 31, 32, 33 durch den Sorptionsreaktor 24 und Aktivkohlefilter 20 geführt und somit getrocknet und gereinigt. Der auf diese Weise behandelte Luftstrom tritt in den Bereich 26'' der Hauptluftkammer 26 ein und verläßt letztere durch die Öffnung 34 und den Luftkanal 35 und wird durch diesen dem Fahrzeuginnenraum zugeführt.

Der Desorptionsluftstrom 43 tritt aus der Heizvorrichtung 30 kommend in den Bereich 26' der Hauptluftkammer 26 ein und wird aufgrund der Stellung der Luftstromsteuerklappe 31 durch das Aktivkohlefilter 22 und den Sorptionsreaktor 25 geführt, wobei der Luftstrom die in der Aktivkohle eingelagerten Schad- und Geruchsstoffe sowie die im Sorptionsreaktor enthaltene Feuchtigkeit aufnimmt. Der den Sorptonsreaktor 25 verlassende Desorptionsluftstrom tritt durch die in der Nebenluftkammer 28 befindliche Fortluftöffnung 37 aus und wird an die Umgebungsluft gemäß Pfeil 17 abgegeben. Werden die Luftstromsteuerklappen 31, 32, 33 in die zweite mögliche Stellung gebracht, wie dies in Fig. 4 dargestellt ist, so dient der Reaktor 25 aufgrund der Stellung der Luftstromsteuerklappen 31, 32, 33 zur Reinigung des Adsorptionsluftstromes, der von der Nebenluftkammer 28 in den Bereich 26'' der Hauptluftkammer 26 gelangt und von dort als gereinigter Luftstrom gemäß Pfeil 13 dem Fahrzeuginnenraum zugeführt wird. Gleichzeitig wird der Desorptionsluftstrom durch das Aktivkohlefilter 20 und den Sorptionsreaktor 24 in die Nebenluftkammer 27 geleitet und tritt durch die Fortluftöffnung 36 gemäß Pfeil 17 in die Umgebungsluft aus.

Bei dem in Fig. 3 und 4 dargestellten Beispiel wird in der Heizung 30 der Luftstrom auf eine Temperatur von maximal 100° C aufgeheizt, mit dem sowohl die Aktivkohle regeneriert als auch der Sorptionsreaktor desorbiert wird. Da der Desorptionsluftstrom zunächst durch das Aktivkohlefilter 20 bzw. 22 tritt, soll sichergestellt werden, daß die Temperatur des Luftstromes 100° Celsius nicht überschreitet, damit die Aktivkohle keiner zu hohen Temperatur ausgesetzt wird.

Die erfindungsgemäße Vorrichtung kann auch als rotierender Reaktor ausgeführt sein. Dabei ist der Rotor mit zwei unterschiedlichen Materialien beschichtet oder gefüllt, und zwar hinsichtlich des zu reinigenden Luftstromes in der Weise, daß ein der Luftzufuhr des Gehäuses benachbarter Bereich das Material zur Senkung der Luftfeuchtigkeit und der in Luftströmungsrichtung folgende Bereich das Schadstoffe adsorbierende Material enthält.

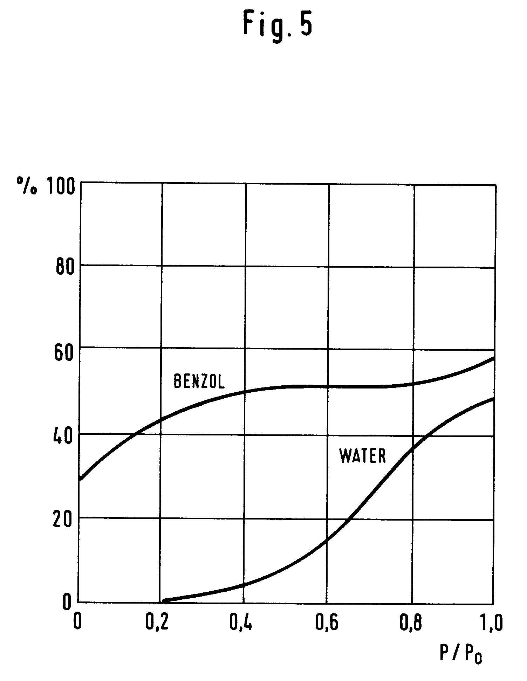

Die Fig. 5 zeigt eine Darstellung der Gleichgewichtskapazität für Benzol und Wasserdampf an Aktivkohle als Funktion der relativen Feuchte bei einer Temperatur von 25° C. Bei niedrigen Dampfpartialdrücken in der Luft ist die Benzolaufnahme groß, wobei die Wasserdampfaufnahme des Materials bei niedrigen Feuchten gering ist. Die Wasserdampfaufnahme nimmt mit steigendem Partialdruck zu und erreicht einen mit Benzol vergleichbaren Maximalwert beim Sättigungsdruck, so daß die Wirkung der Aktivkohle deutlich reduziert wird. Durch die erfindungsgemäße Vorrichtung und das damit ausgeführte Verfahren wird der Luftstrom zunächst getrocknet, so daß das Aktivkohlefilter keine Feuchtigkeit aufnehmen muß, sondern vollständig zur Schadstoffbeseitigung zur Verfügung steht.

Anstelle von Aktivkohle kann das Filter zur Adsoption von Schadstoffen auch andere geeignete Filterwerkstoffe enthalten, beispielsweise ein unter der Handelsbezeichung "Baylith" vertriebenes Zeolithmaterial, das mit der Sortenbezeichnung WE-G 672 angeboten wird.

Die Desorptionstemperatur ist unter Berücksichtigung der jeweiligen Filterwerkstoffe festzulegen, da die Temperaturverträglichkeit der einzelnen Stoffe sehr unterschiedlich ist. Es ist dabei anzustreben, mit einer möglichst hohen Temperatur zu desorbieren, weil dadurch die Reinigungswirkung bei der Deosrption des Filters verbessert und beschleunigt wird.

## Patentansprüche

1. Vorrichtung zur Behandlung eines einem Fahrzeuginnenraum zugeführten Luftstromes (13) mit einem Luftführungsgehäuse (2, 23), in dem zur Senkung der Luftfeuchtigkeit ein Sorptionsreaktor (3, 24, 25) und zur Beseitigung von Luftverunreinigungen ein Filter angeordnet sind und in Luftströmungsrichtung vor dem Sorptionsreaktor (3, 24, 25) eine bedarfsweise zuschaltbare Heizvorrichtung (8, 30) vorgesehen ist, dadurch gekennzeichnet,
daß das Filter (4, 20, 22) ein für Schadstoffe wirksames Adsorbens enthält und dieses Filter dem Sorptionsreaktor (3, 24, 25) für die Luftfeuchtigkeit nachgeschaltet ist.

2. Vorrichtung nach Anspruch 1, dadurch gekennzeichnet, daß der Sorptionsreaktor (3, 24, 25) und das Filter (4, 20, 22) für die Schadstoffe großflächig unmittelbar aneinanderliegen.

3. Vorrichtung nach Anspruch 1 oder 2, dadurch gekennzeichnet,
daß das Schadstoffe adsorbierende Material des Filters (4, 20, 22) aus Zeolith, vorzugsweise der Sorte WE-G 672 besteht.

4. Vorrichtung nach Anspruch 1 oder 2, dadurch gekennzeichnet,
daß das Filter (4, 20, 22) aus einer Schüttung von Aktivkohlekugeln oder aus einem mit Aktivkohlekugeln versehenen offenporigen Schaumstoff besteht.

5. Vorrichtung nach einem der vorhergehenden Ansprüche, dadurch gekennzeichnet,
daß der Sorptionsreaktor (3) und das Filter (4) die Form von ineinandergesteckten hohlen Kegelstümpfen aufweisen, an deren verjüngter Stirnseite eine Abschlußwand (18) angeordnet ist.

6. Vorrichtung nach einem der vorhergehenden Ansprüche, dadurch gekennzeichnet,
daß abströmseitig des Filters (4) in dem Luftführungsgehäuse (2) eine Luftkammer(5) gebildet ist und daß ein Luftkanal (12) von der Luftkammer (5) zum Fahrzeuginnenraum und ein Luftkanal (14) zur Außenseite des Fahrzeugs vorgesehen sind, die wechselweise geöffnet bzw. geschlossen sind, wobei vorzugsweise die Luftkanäle (12, 14) benachbart zueinander an der Luftkammer (5) angeschlossen und von einer gemeinsamen Klappe (15) wechselseitig verschließbar sind.

7. Vorrichtung nach einem der Ansprüche 1 bis 4, dadurch gekennzeichnet,
daß in dem Luftführungsgehäuse (23) zwei parallele Luftströmungswege gebildet und in jedem der Luftströmungswege ein Sorptionsreaktor (24, 25) mit einem Schadstoffe adsorbierendem Filter (20, 22) vorgesehen sind und daß Luftstromsteuerelemente (31, 32, 33) vorgesehen sind, durch die im Wechsel ein Luftströmungsweg an einen Zuluftkanal (35) des Fahrzeuginnenraums angeschlossen ist und der andere Luftströmungsweg zur Außenseite des Fahrzeugs führt.

8. Vorrichtung nach Anspruch 7, dadurch gekennzeichnet, daß die Luftströmungswege durch eine gemeinsame Hauptluftkammer (26) und zwei getrennte Nebenluftkammern (27, 28) gebildet sind und jeweils ein Sorptionsreaktor (24 bzw. 25) mit Filter (20 bzw. 22) zwischen der Hauptluftkammer (26) und einer der Nebenluftkammern (27, 28) angeordnet ist, wobei das Filter (20, 22) sich jeweils auf der der Hauptluftkammer (26) zugewandten Seite des Sorptionsreaktors (24, 25) befindet.

9. Vorrichtung nach Anspruch 8, dadurch gekennzeichnet, daß die Hauptluftkammer (26) abströmseitig mit einem Zuluftkanal (35) verbunden ist und die abströmseitigen Enden der Nebenluftkammern (27, 28) mit Öffnungen (36, 37) versehen sind, an die zur Außenseite des Fahrzeugs führende Luftkanäle angeschlossen sind.

10. Verfahren zur Behandlung eines einem Fahrzeuginnenraum zuführbaren Luftstromes, der in einem Filterelement gereinigt und in einem Sorptionsreaktor getrocknet wird und bei dem der Sorptionsreaktor desorbierbar ist, dadurch gekennzeichnet,
daß im Adsorptionsbetrieb zunächst der Luftstrom durch den Sorptionsreaktor (3, 24) geführt und in diesem getrocknet wird und daß anschließend eine Schad- und Aromastoffbeseitigung in einem Filter (4, 20) mit einem für Schadstoffe wirksamen Adsorbens erfolgt und im Desorptionsbetrieb der Luftstrom mittels einer Heizeinrichtung (8, 30) erwärmt und danach der aus Sorptionsreaktor (3, 25) und Schadstoffilter (4, 22) gebildeten Einheit zugeführt und schließlich als Abluft in die Umgebung des Fahrzeugs abgegeben wird.

11. Verfahren nach Anspruch 10, dadurch gekennzeichnet, daß in einer gemeinsamen Einheit aus Sorptionsreaktor (3) und Schadstoffilter (4) in zeitlich aufeinanderfolgenden Abschnitten die Adsorption und die Desorption erfolgt.

12. Verfahren nach Anspruch 10, dadurch gekennzeichnet, daß in zwei parallel von Luft durchströmten Einheiten aus je einem Sorptionreaktor (24, 25) und Schadstoffilter (20, 22) eine Einheit von einem im Adsorptionsluftstrom und gleichzeitig die andere Einheit von einem Desorptionsluftstrom beaufschlagt werden und in Abhängigkeit vorgegebener Parameter ein Wechsel der Betriebsarten in beiden Einheiten erfolgt, wobei vorzugsweise die Temperatur des Luftstromes zur Desorption weniger als 100° C beträgt.

13. Verfahren nach Anspruch 12, dadurch gekennzeichnet, daß als Kriterium für den Wechsel der Betriebsarten der Belastungsgrad des im Adsorptionsluftstrom befindlichen Sorptionsreaktors dient.

14. Verfahren nach Anspruch 11, dadurch gekennzeichnet, daß die Länge des Zeitabschnittes für die Adsorption vorgegeben ist und vorzugsweise mehrere Stunden beträgt.

15. Verfahren nach Anspruch 14, dadurch gekennzeichnet, daß die Länge des Zeitabschnittes für die Desorption zeitlich vorgegeben oder vom Regenerationsgrad des Sorptionsreaktors (3) und/oder Filters (4) bestimmbar ist und vorzugsweise weniger als 30 Minuten beträgt und wobei zur Desorption der Luftstrom auf etwa 120° C oder mehr aufgeheizt wird.
